# EUROPEAN PATENT SPECIFICATION

(11) **EP 3 279 076 B1**
(45) Date of publication and mention of the grant of the patent: **25.07.2018**
(21) Application number: 16722258.7
(22) Date of filing: 18.03.2016
(51) Int. Cl.: B63B 22/16, G08G 3/00, B63B 51/00

(54) **OFFSHORE MARITIME ACCESS CONTROL SYSTEM**
SISTEMA MARÍTIMO DE CONTROL DE ACCESO EN MAR ABIERTO
SYSTÈME MARITIME DE CONTRÔLE D'ACCÈS EN HAUTE MER

(30) Priority: 31.03.2015 ES 201530436
(43) Date of publication of application: 07.02.2018
(73) Proprietor: Scio Soft, S.L., 15004 A Coruña (ES)
(72) Inventor: BERMÚDEZ PESTONIT, Pablo, 15004 A Coruña (ES); RAÑO JARES, Isaac, 15004 A Coruña (ES); VARELA FERNÁNDEZ, Carlos, 15004 A Coruña (ES); CASTELO PARDO, Angel Luís, 15004 A Coruña (ES)
(74) Representative: Carvajal y Urquijo, Isabel
(86) International application number: PCT/ES2016/070187
(87) International publication number: WO 2016/156637

(56) References cited:
- JP-A- 2005 225 375
- US-A1- 2013 054 138
- US-B1- 6 980 228

## Description

### Field of the invention

The present invention refers to the area of maritime surveillance and security.

### State of the art

Currently, the systems to control vessel movement are performed by using radars, navigation control devices such as AIS and by means of drones. It is expensive to maintain all these systems and to implement them in the whole coast, as well as in areas featuring geographical accidents where, in many cases, "shadow" areas are generated through which vessels can navigate without being detected. Furthermore, these systems only provide information about course and speed, but they do not provide images or data about what the vessel is doing in any case. JP 2005 225375 discloses such an offshore control system. Therefore, it is desirable a system which allows surveillance of the movement and state of vessels in determined areas.

### Description of the invention

The object of the present invention is to overcome the limitations encountered in the state of the art. This object is achieved by placing a video sensing and surveillance system in the sea which allows detection of a vessel when it access to a determined area, notifying this situation to a control centre and making it possible for real time images and/or photos of said vessel to be seen therein.
This object is achieved by means of an offshore maritime access control system which includes several buoys being moored and separate from each other. The buoys define a virtual line the access to which is intended to be controlled. There is at least a camera installed in each buoy which is oriented towards another buoy. Said camera is coupled to a processor so as to detect, in the image captured and in real time, the presence of a vessel when she crosses or stands between a buoy and the following one. When this happens, those data related to the detection event are sent by means of a communication unit. For example, the images captured, the moment they were captured and the location of the buoy that captures the image.

In order for it to be autonomous, the buoy is preferably provided with a battery to store energy.

Optionally, it is provided with a wind power generator to charge the battery.

Optionally, it is provided with a solar panel collector to charge the battery.

If the length of the controlled access virtual line is longer than a maximum distance (which depends fundamentally on the characteristics of the camera being used), the system must include another intermediate buoy with two cameras, each one of them being oriented on either side towards a different buoy.

Optionally, the camera in the buoy can be remotely oriented so as to track a vessel passing by.

Optionally, the processor is implemented with a pattern recognition algorithm which has been previously trained to detect a vessel.

Optionally, the buoys are moored using three mooring points in order to make sure that the position of the buoy is not modified.

Preferably, the buoy is of the spar type, having a mast which minimizes the oscillations and undulating motion produced by the waves.

Optionally, the system includes a control centre, generally inland, to receive the data related to the detection event that have been sent from the buoy, and even to act upon the cameras.

### Brief description of the drawings

FIG. 1 shows an example of a buoy according to an exemplary embodiment.
FIG. 2 shows three buoys defining a controlled access virtual line.

### Detailed description of an embodiment

An example of an embodiment of the invention, which minimizes the environmental impact and the production costs, is described herein with reference to the figures.

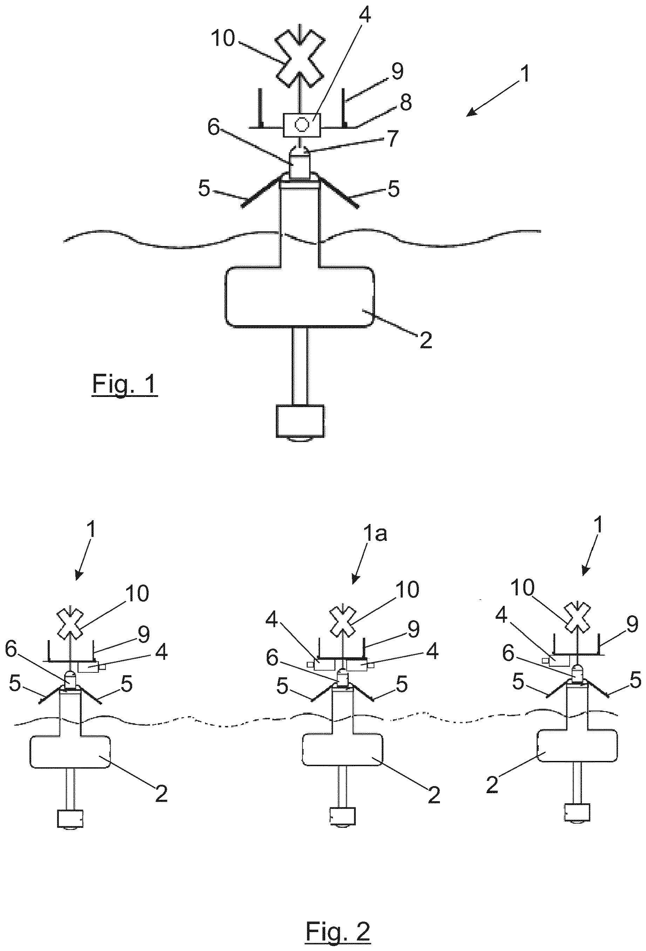

FIG. 1 illustrates an embodiment of a buoy **1** comprising a platform **2** acting as a support of one or several cameras **4** which are continuously recording and which are locally connected to a processor intended to compare the images with training patterns so as to detect vessels. A communication unit having antennas **9** transmits data related to the detection event to a control centre. The communication can take place by satellite, 3G, 4G, WiFi, etc...

In order to control the access, there is a virtual line established between two points in the sea. This line is established by mooring the buoys **1** as floating structures being separate from each other, generally in a range of 500m to 800m, as it is shown in FIG. 2. Thereby, they simulate a line of "posts". Any vessel crossing said line is detected, and it is possible to track her in the video images captured by the cameras located in the buoy(s). This detection event is performed in real time to report it to a control centre by sending an alarm. In the control centre, usually located inland, it will be even possible to visualize the images the cameras are capturing. This line is in fact an area having a detection width of about 500 m. It is estimated that it allows control of any vessel crossing therethrough up to 300 Km/h, so that in practice the detection of any floating object is guaranteed.

On the other hand, the control centre (not shown) is provided, in turn, with its own communication unit to receive notifications of vessels detection, and also with a processing unit to process the data received and to visualize the image captured by the cameras.

Once the vessel is detected, the tracking can be performed. A user in the control centre can set the cameras **4** operation remotely, and even orient them in real time towards the vessel to confirm detection or to obtain more information.

Using a buoy **1** involves mainly two difficulties: guarantee orientation and electric supply.

The correct orientation of the buoy must be guaranteed. On the one hand, it is necessary to make sure that the cameras are directed to the correct area, and on the other hand that they do not move too much so that the images feature enough quality to allow identifying a vessel.

These requirements are guaranteed by means of a strong anchoring and a design specific to the buoy.

The buoys are moored using three mooring points and it consists of the placement of three sea anchors separated from each other, and of tying the structure thereto by means of chains. The presence of the three points prevents rotation and displacement in any direction.

Regarding the design, the buoy **1** is preferably a longitudinal buoy of the *spar* type. The *spar* buoy has a mast-shaped structure to mitigate the undulating motion produced by the waves or the wind.

The combination of both solutions prevents the buoy 1 from pitching at any axis of more than 15º with respect to the initial position.

With respect to the second difficulty, the power supply has been solved in the following way. The power requirements of a buoy of the type described herein are moderate. Because of that, it can be supplied by means of renewable energy. Power can be supplied preferably by means of solar panel collectors 5, or by means of a wind power generator (not shown), or combinations of both power sources that supply a battery rack which guarantee the operation of the system 24 h X 7. The buoy processor manages the electric generation and the consumption thereof. It also verifies that the position is correct and that the cameras **4** are in operation.

FIG. 1 shows that how the buoy **1** is properly signalized so as not to interfere with local navigation. In order to meet the maritime regulations and so as to be considered a special mark, the colour thereof must be yellow and include a radar reflector **6,** a top sign **10** and a signal light 7 to assist in the localization thereof from the vessels. The radar reflector **6** will reflect the energy received in the same reception direction so as the vessel identifies the beacon. The top sign **10** consists, in this case, of a yellow blade indicating special navigation areas (traffic separation signal, submarine cable, natural reserve borderline, fish farm, military exercises...) and the signal light **7** must be white with a determined emission frequency to prevent it from being confused with others (cardinal directions signs, navigable waters or isolated danger).

### Numerical references

1 Buoy
1a Intermediate buoy
2 Platform
4 Camera.
5 Solar panel collector.
6 Radar reflector.
7 Signal light.
8 Platform.
9 Antenna.
10 Top sign

## Claims

1. Offshore maritime access control system **characterized in that** it comprises:
- at least two buoys (1, 1a) which, in operation, are moored and separate from each other, defining a controlled access virtual line, wherein each buoy (1) comprises a camera (4) oriented towards the other buoy (1), the camera (4) is coupled to a processor configured for real time detection of a vessel presence in the image captured and for sending data related to the detection event by means of communication unit.

2. Offshore maritime access control system according to claim 1, wherein the buoy (1) comprises a battery to store energy.

3. Offshore maritime access control system according to claim 2, wherein the buoy (1) comprises a wind power generator to charge the battery.

4. Offshore maritime access control system according to claim 2 or 3, wherein the buoy (1) comprises a solar panel collector (9) to charge the battery.

5. Offshore maritime access control system according to any of the previous claims, comprising at least an intermediate buoy (1a), if the length of the controlled access virtual line is longer than a maximum distance, wherein the intermediate buoy (1a) comprises two cameras (4), each one being oriented to a different buoy.

6. Offshore maritime access control system according to any of the previous claims, wherein the camera (4) is orientable.

7. Offshore maritime access control system according to any of the previous claims, wherein the processor is implemented with a pattern recognition algorithm being previously trained to detect a vessel.

8. Offshore maritime access control system according to any of the previous claims, wherein the buoys (1, 1a) are moored using three mooring points.

9. Offshore maritime access control system according to any of the previous claims, wherein the buoy (1, 1a) is of the spar type.

10. Offshore maritime access control system according to any of the previous claims, also comprising a control centre configured to receive the data related to the detection event being sent by the communication unit of the buoy (1).

## Patentansprüche

1. Offshore-Seezugangskontrollsystem, **dadurch gekennzeichnet, dass** es Folgendes umfasst:
- mindestens zwei Bojen (1, 1a), die bei Betrieb festgemacht und voneinander beabstandet sind, wobei sie eine virtuelle Linie für kontrollierten Zugang definieren, wobei jede Boje (1) eine Kamera (4), die in Richtung der anderen Boje (1) ausgerichtet ist, umfasst, wobei die Kamera (4) mit einem Prozessor gekoppelt ist, der für Echtzeiterfassung eines Schiffs, das in dem aufgenommenen Bild vorliegt, und zum Senden von Daten bezüglich des Erfassungsereignisses mittels der Kommunikationseinheit konfiguriert ist.

2. Offshore-Seezugangskontrollsystem nach Anspruch 1, wobei die Boje (1) einen Akkumulator zum Speichern von Energie umfasst.

3. Offshore-Seezugangskontrollsystem nach Anspruch 2, wobei die Boje (1) einen Windkraftgenerator zum Laden des Akkumulators umfasst.

4. Offshore-Seezugangskontrollsystem nach Anspruch 2 oder 3, wobei die Boje (1) einen Sonnenkollektor (9) zum Laden des Akkumulators umfasst.

5. Offshore-Seezugangskontrollsystem nach einem der vorhergehenden Ansprüche, das mindestens eine Zwischenboje (1a) umfasst, wenn die Länge der virtuellen Linie für kontrollierten Zugang größer als der maximale Abstand ist, wobei die Zwischenboje (1a) zwei Kameras (4) umfasst, von denen jede auf verschiedene Bojen ausgerichtet ist.

6. Offshore-Seezugangskontrollsystem nach einem der vorhergehenden Ansprüche, wobei die Kamera (4) ausrichtbar ist.

7. Offshore-Seezugangskontrollsystem nach einem der vorhergehenden Ansprüche, wobei der Prozessor mit einem Mustererkennungsalgorithmus implementiert ist, der zuvor auf die Erkennung von Schiffen trainiert wurde.

8. Offshore-Seezugangskontrollsystem nach einem der vorhergehenden Ansprüche, wobei die Bojen (1, 1a) durch drei Festmachpunkte festgemacht sind.

9. Offshore-Seezugangskontrollsystem nach einem der vorhergehenden Ansprüche, wobei die Boje (1, 1a) eine Spierenboje ist.

10. Offshore-Seezugangskontrollsystem nach einem der vorhergehenden Ansprüche, das auch ein Kontrollzentrum umfasst, das zum Empfangen der Daten bezüglich des Erfassungsereignisses, das durch die Kommunikationseinheit an die Boje (1) geschickt wird, konfiguriert ist.

## Revendications

1. Système de contrôle d'accès maritime offshore, **caractérisé en ce qu'**il comprend :
- au moins, deux bouées (1, 1a) qui, en fonctionnement, sont amarrées et séparées l'une de l'autre, définissant une ligne virtuelle à accès contrôlé, dans lequel chaque bouée (1) comprenant une caméra (4) orientée vers l'autre bouée (1), la caméra (4) étant couplée à un processeur configuré pour détecter en temps réel la présence d'un navire dans l'image capturée et pour envoyer des données relatives à l'événement de détection, au moyen d'une unité de communication.

2. Système de contrôle d'accès maritime offshore, selon la revendication 1, dans lequel la bouée (1) comprend une batterie pour stocker de l'énergie.

3. Système de contrôle d'accès maritime offshore, selon la revendication 2, dans lequel la bouée (1) comprend un générateur d'énergie éolienne pour charger la batterie.

4. Système de contrôle d'accès maritime offshore, selon la revendication 2 ou 3, dans lequel la bouée (1) comprend un collecteur de panneau solaire (9) pour charger la batterie.

5. Système de contrôle d'accès maritime offshore, selon l'une quelconque des revendications précédentes, comprenant, au moins, une bouée intermédiaire (1a), si la longueur de la ligne virtuelle à accès contrôlé est supérieure à une distance maximale, dans lequel la bouée intermédiaire (1a) comprenant deux caméras (4), chacune orientée vers une bouée différente.

6. Système de contrôle d'accès maritime offshore, selon l'une quelconque des revendications précédentes, dans lequel la caméra (4) est orientable.

7. Système de contrôle d'accès maritime offshore, selon l'une quelconque des revendications précédentes, dans lequel le processeur est mis en oeuvre avec un algorithme de reconnaissance de formes préalablement formé pour détecter un navire.

8. Système de contrôle d'accès maritime offshore, selon l'une quelconque des revendications précédentes, dans lequel les bouées (1, 1a) sont amarrées, à l'aide de trois points d'amarrage.

9. Système de contrôle d'accès maritime offshore, selon l'une quelconque des revendications précédentes, dans lequel la bouée (1, 1a) est à espar.

10. Système de contrôle d'accès maritime offshore, selon l'une quelconque des revendications précédentes, comprenant également un centre de commande configuré pour recevoir les données relatives à l'événement de détection envoyé par l'unité de communication de la bouée (1).
